Europäisches Patentamt

European Patent Office

Office européen des brevets

(11) Veröffentlichungsnummer: **0 359 128**
**A1**

## (12) EUROPÄISCHE PATENTANMELDUNG

(21) Anmeldenummer: **89116539.1**

(22) Anmeldetag: **07.09.89**

(51) Int. Cl.5: **H02G 1/08 , B29C 47/10**

(30) Priorität: **12.09.88 DE 3830942**

(43) Veröffentlichungstag der Anmeldung:
**21.03.90 Patentblatt 90/12**

(34) Benannte Vertragsstaaten:
**ES GR**

(71) Anmelder: **WAVIN B.V.**
**Händellaan 251**
**NL-8031 EM Zwolle(NL)**

(72) Erfinder: **Graafmann, Jürgen**
**Buchsbaumweg 10**
**D-4450 Lingen(DE)**

(74) Vertreter: **Busse & Busse Patentanwälte**
**Postfach 1226 Grosshandelsring 6**
**D-4500 Osnabrück(DE)**

(54) **Kunststoffrohr zur Aufnahme von Einzügen, insbesondere Kabelschutzrohr.**

(57) Ein einstückig aus einer thermoplastischen Formmasse stranggepreßtes Kunststoffrohr (1) zur Aufnahme von Einzügen, insbesondere ein Kabelschutzrohr zur Aufnahme von Kabeln wie Lichtleiterkabeln, ist innenseitig mittels eines Gleitmittels, vorzugsweise in Verbindung mit einer Profilierung (3;3';3"), reibungsmindernd ausgebildet. Das Gleitmittel besteht aus Silikonöl und ist in die Formmasse in einem geringen Mengenanteil eingearbeitet, der jedoch auf der inneren Oberfläche der Rohrwandung (2) eine Reibungsminderung hervorruft.

EP 0 359 128 A1

## Kunststoffrohr zur Aufnahme von Einzügen, insbesondere Kabelschutzrohr

Die Erfindung betrifft ein einstückig aus einer thermoplastischen Formmasse stranggepreßtes Kunststoffrohr zur Aufnahme von Einzügen, insbesondere Kabelschutzrohr, nach dem Oberbegriff des Anspruchs 1.

Häufig werden Rohre zum Schutz und zur Bündelung von dünneren Rohren, Kabeln, Schläuchen und dgl. verlegt, wobei letztere nach dem Verlegen der Schutzrohre einzuziehen sind. Das Einziehen kann auch später notwendig werden, wenn etwa noch verbliebener freier Raum im Schutzrohr zu nutzen ist oder wenn ein Kabel oder Innenrohr ausgetauscht werden muß. Die Länge der dabei einsetzbaren, zu verlegenden Schutzrohrabschnitte zwischen zwei Zugangsstellen, wie etwa Kabelschächten, die möglichst groß gewählt wird, um große Einzugslängen in einem Stück zu erhalten und große Verlegeschritte zu erzielen, ist vor allem durch die Reibung des Einzugs auf der Innenseite der Rohrwandung des Schutzrohres begrenzt.

Um diese Reibung zu mindern, ist bereits ein Kunststoffrohr der eingangs angegebenen Art bekannt geworden (DE-PS 35 39 304), bei dem die Rohrwandung innenseitig mittels eines Gleitmittels in Verbindung mit einer Innenrofilierung dadurch reibungsmindernd ausgebildet ist, daß das fertigungsseitig in das Rohrinnere eingebrachte Gleitmittel haftend in allseitiger Verteilung in der Innenprofilierung aufgenommen ist. Das Kunststoffrohr besitzt auf diese Weise gleichsam eine Dauerschmierung, die fabrikmäßig eingebracht werden kann und im Schutzrohr zumindest für die normale Lebensdauer und die normale Fluktuation von Einzügen vorhält. Die Innenprofilierung verhindert dabei, daß das Gleitmittel schon durch den ersten Kontakt mit dem Einzug abgewischt wird, und hält stets in ihren tieferliegenden Bereichen Gleitmittelreserven bereit. Auf diese Weise ist das Einziehen von insbesondere Kabeln in die bereits verlegten Schutzrohre vor Ort generell vereinfacht und erleichtert, da durch das allseitig bereitgestellte Gleitmittel in Verbindung mit der ihrerseits durch eine entsprechende Verminderung der Oberfläche reibungsmindernd wirkenden Innenprofilierung der Rohrwandung der Reibwiderstand wesentlich herabgesetzt ist.

Das Gleitmittel besteht bei dem bekannten Kunststoff-Schutzrohr vorzugsweise aus einer Mischung von Öl, z.B. Weißöl, oder einem Ölgemisch, in das Mikrokugeln aus Schaumglas eingelagert sind. Ein derartiges Gleitmittel ergibt zwar gute Schmiereigenschaften, bereitet jedoch Schwierigkeiten bei der Entsorgung nicht mehr benötigter Kunststoffrohre, die auch nach längeren Verlegezeiträumen noch die innere Gleitmittelbeschichtung mehr oder weniger unverändert enthalten. Im Interesse einer Wiederverwendung des Kunststoffmaterials können solche Rohre nicht ohne weiteres in den Herstellungsprozeß von Kunststoffrohren als Rohstoff eingespeist werden, da die vorwiegend aus Glas und Öl bestehenden Schmiermittelanteile die Materialzusammensetzung des Rohstoffes in unkontrollierter Weise verändern. Dabei läßt sich auch diese Gleitmittelbeschichtung wegen ihrer allseitigen guten Haftung in der Innenprofilierung des Kunststoffrohrs nicht oder nur mit größtem Aufwand von dem Kunststoffmaterial der Schutzrohre trennen.

Zum Einbringen des Gleitmittels in das bekannte Kunststoffrohr ist ein Verfahren bekannt geworden (EP-OS 0 221 481), bei dem ein Gleitmittelvorrat im Überfluß in eines der beiden Enden des mit der Innenprofilierung zur Aufnahme des Gleitmittels versehenen Rohres eingefüllt und der Gleitmittelvorrat als Pfropfen durch Druckluftbeaufschlagung über ein im wesentlichen durchmessergleiches Treiborgan durch das Rohr, dessen Innenwandung unter Abgabe von Gleitmittel fortschreitend rundum benetzend, hindurchgetrieben wird. Durch die Verwendung des Gleitmittels im Überfluß werden erhebliche Gleitmittelmengen verbraucht, indem bei jedem Beschichtungsvorgang eine weit größere Menge des Gleitmittels zum Einsatz kommt als schließlich von der Innenprofilierung des Kunststoffrohrs aufgenommen wird. Das überschüssige Gleitmittel tritt am Ende des Beschichtungsvorgangs üblicherweise als Pfropfen unter Druck frei aus dem Rohrende aus und kann insbesondere dann, wenn das Gleitmittel auf die Innenwandung im verlegten Zustand des Rohres und in sonstiger Weise vor Ort aufgebracht wird, Umweltprobleme hervorrufen. Denn obwohl die zum Einsatz kommenden Gleitmittel in der Regel physiologisch unbedenklich sind, sind sie aufgrund ihrer Beschaffenheit nur schwer zu entfernen und können so eine unerwünschte Verschmutzung der Umgebung zur Folge haben.

Der Erfindung liegt die Aufgabe zugrunde, ein Kunststoffrohr der eingangs angegebenen Art zu schaffen, das zur Erzielung allgemein vereinfachter und erleichterter Einzugsbedingungen vor Ort durch Herabsetzung der Reibungskräfte sowohl bei der Erstausstattung des Rohres mit Einzügen als auch bei nachträglichen Einziehvorgängen mit denkbar geringen Gleitmittelmengen auskommt und Entsorgungsprobleme im Zusammenhang mit einer Wiederverwendung nicht mehr benötigter Rohre als Rohmaterial (Recycling) wie auch Umweltprobleme durch aus dem Rohr austretendes Gleitmittel vermeidet.

Diese Aufgabe wird nach der Erfindung durch eine Ausgestaltung des Kunststoffrohres gemäß dem Anspruch 1 gelöst. Dadurch, daß bei dieser Ausgestaltung das Silikonöl als Gleitmittel in Form eines Zusatzstoffes in die Formmasse zur Bildung des Kunststoffrohres eingearbeitet wird, ist ein nachträglicher Beschichtungsvorgang der Innenseite des Kunststoffrohres mit den daraus folgenden Entsorgungs- und Umweltproblemen vermieden. Dabei wurde gefunden, daß schon denkbar geringe Mengenanteile des Silikonöls von etwa nur 0,2 bis 5 Gew.-%, bezogen auf das Gesamtgewicht der Formmasse, vorzugsweise etwa 1 bis 2,5 Gew.-%, ausreichen, um eine signifikante Reibungsminderung auf der inneren Oberfläche der Rohrwandung hervorzurufen. Diese Wirkung wird durch geeignete, z.B. handelsübliche Silikonöle wie linearpolymere Dimethylsiloxane oder auch Methylphenylsiloxane erreicht und hält ohne weitere Maßnahmen für die gesamte zu er wartende Lebensdauer der Kunststoffrohre vor. Das Einbringen des Silikonöls in die Formmasse kann beispielsweise mittels der üblichen Mischaggregate bei der Granulatherstellung aus dem als Rohrmaterial Verwendung findenden Polymeren erfolgen, wobei besonders gute Ergebnisse bei Verwendung eines Polyolefins als Kunststoff-Rohrmaterial, wie Polyethylen, vorzugsweise HDPE, erzielt werden. Das Silikonöl kann aber auch an jeder anderen geeigneten Stelle in die Formmasse als Zusatzstoff, ggf. in Kombination mit anderen Zusatzstoffen, wie Farbpigmenten, oder anderen Gleitmitteln, z.B. Glimmer oder PTFE, eingegeben werden. So ist insbesondere auch ein Einspritzen des Silikonöls in die teilweise oder bereits ganz aufgeschmolzene Formmasse innerhalb der Schneckenstrangpresse denkbar. In jedem Fall wird durch die Einarbeitung des Silikonöls als Gleitmittel in die Formmasse eine von Gleitmittelanteilen durchdrungene Ausbildung der Rohrwandung erreicht, mit dem Vorteil, daß auch im Falle etwaiger oberflächiger Beschädigungen der inneren Oberfläche der Rohrwandung, beispielsweise durch das zum Einziehen verwendete Werkzeug, die auf diese Weise freigelegten tieferliegenden Materialbereiche der Rohrwandung gleitmittelhaltige Flächen darbieten, um auch in solchen Fällen den Einziehvorgang nicht zu erschweren. Durch die Erfindung ist somit ein Kunststoffrohr geschaffen, das unter allen erdenklichen Arbeitsbedingungen bei sparsamstem Gleitmittelverbrauch in jeder Hinsicht problemlos seine Funktion als Schutzrohr erfüllt. Dabei kann die innere Oberfläche der Rohrwandung glatt oder vorzugsweise durch entsprechende Formgebung der Extrusionsdüse mit einer Innenprofilierung versehen sein, die ihrerseits durch Oberflächenreduzierung reibungsmindernd wirkt und dadurch das reibungsarme Einbringen der Einzüge unterstützt.

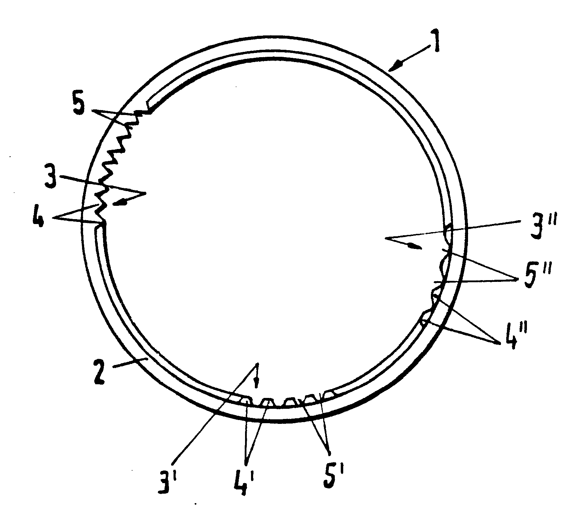

Weitere Merkmale und Vorteile der Erfindung ergeben sich aus den Ansprüchen und der nachfolgenden Beschreibung in Verbindung mit der Zeichnung,in deren einziger Figur drei bevorzugte Ausführungsbeispiele des Gegenstands der Erfindung in Form einer Stirnansicht eines erfindungsgemäßen Kunststoffrohrs schematisch veranschaulicht sind.

Die Zeichnung zeigt ein als Ganzes mit 1 bezeichnetes Kunststoffrohr, das insbesondere als Kabelschutzrohr Verwendung finden kann. Das Rohr 1 weist in der Regel einen durch Norm vorgegebenen Außendurchmesser auf und kann im Boden verlegt werden, wobei die einzelnen Rohre 1 über Muffenteile aneinandergesetzt werden können.

Das Rohr 1 besitzt eine Wandung 2, die innenseitig glatt sein kann, bei den dargestellten Beispielen jedoch mit einer Profilierung 3 versehen ist, die aus Darstellungsgründen nur über einen Teil des Innenumfangs eingezeichnet ist. Die Innenprofilierung 3 besteht nach einem ersten Beispiel aus Längsrippen 4 mit dazwischenliegenden Rillen 5 mit jeweils im Querschnitt dreieckförmiger Ausbildung. Die Innenprofilierung 3 ist insoweit dachförmig mit übereinstimmendem Positiv/Negativ-Profil ausgebildet.

In einem weiteren Umfangsbereich des Rohres 1 ist als weiteres Beispiel eine Innenprofilierung 3' in ähnlicher Ausbildung wie die Innenprofilierung 3 dargestellt, wobei jedoch die in das Rohrinnere ragenden Spitzen des Dreiecksprofils abgeflacht sind, so daß die Rippen 4' und dementsprechend die dazwischenliegenden Rillen 5' trapezförmig ausgebildet sind.

Während bei der Ausführungsform der Rippen 4 der Innenprofilierung 3 durch die zum Rohrinneren gerichtete spitze Gratlinie des Dreiecksprofils eine Reibungsminderung durch starke Oberflächenreduzierung erreicht ist, bieten die Rippen 4' der Innenprofilierung 3' mit ihrer zum Rohrinneren gerichteten kurzen Trapezseite eine demgegenüber vermehrte gleitmittelhaltige Oberfläche dar, die ihrerseits entsprechend reibungsmindernd wirkt.

Eine Zwischenform zwischen den Innenprofilierungen 3 und 3' zeigt das Beispiel einer weiteren in einem Umfangsbereich des Rohres 1 dargestellten Innenprofilierung 3'', bei der die Rippen 4'' und entsprechend die Rillen 5'' im Querschnitt wellenförmig ausgebildet sind. Zahlreiche weitere Querschnittsformen der Rippen sind denkbar.

In die Formmasse, aus der das Rohr 1 als einstückiges Strangpreßteil hergestellt wird, ist als Gleitmittel ein Silikonöl in einem Mengenanteil von beispielsweise 1,5 Gew.% eingearbeitet, das auf der Oberfläche der Innenprofilierung 3, 3', 3'' bzw. auf der freiliegenden Innenseite der Rohrwandung 2 einen Gleiteffekt bzw. eine Reibungsminderung beim Einziehen van Kabeln und dgl. in das Rohr 1 hervorruft ohne, die mechanischen Eigenschaften des Rohrs nachteilig zu beeinflussen.

## Ansprüche

1. Einstückig aus einer thermoplastischen Formmasse stranggepreßtes Kunststoffrohr zur Aufnahme von Einzügen, insbesondere Kabelschutzrohr,dessen Wandung innenseitig mittels eines Gleitmittels reibungsmindernd ausgebildet ist, dadurch gekennzeichnet, daß das Gleitmittel aus Silikonöl besteht und das Silikonöl in die Formmasse in einem auf der inneren Oberfläche der Rohrwandung (2) eine Reibungsminderung hervorrufenden Mengenanteil in Form eines Zusatzstoffes eingearbeitet ist.

2. Kunststoffrohr nach Anspruch 1, dadurch gekennzeichnet, daß der Mengenanteil des Silikonöls etwa 0,2 bis 5 Gew.-%, bezogen auf das Gesamtgewicht der Formmasse, vorzugsweise etwa 1 bis 2,5 Gew.-%, beträgt.

3. Kunststoffrohr nach Anspruch 1 oder 2, dadurch gekennzeichnet, daß die thermoplastische Formmasse aus einem mit dem Zusatzstoff kompatiblen Polymeren, insbesondere einem Polyolefin wie Polyethylen, vorzugsweise HDPE, besteht.

4. Kunststoffrohr nach einem der Ansprüche 1 bis 3, dadurch gekennzeichnet, daß die innere Oberfläche der Rohrwandung (2) von einer Innenprofilierung (3;3';3'') eingenommen ist.

5. Kunststoffrohr nach Anspruch 4, dadurch gekennzeichnet, daß die Innenprofilierung (3;3';3'') von im wesentlichen in Längsrichtung des Rohres (1) verlaufenden Rippen (4;4';4'') gebildet ist.

6. Kunststoffrohr nach Anspruch 5, dadurch gekennzeichnet, daß die Rippen (4) im Querschnitt dreieckförmig ausgebildet sind.

7. Kunststoffrohr nach Anspruch 5, dadurch gekennzeichnet, daß die Rippen (4) im Querschnitt trapezförmig ausgebildet sind.

8. Kunststoffrohr nach Anspruch 5, dadurch gekennzeichnet, daß die Rippen (4'') im Querschnitt wellenförmig ausgebildet sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | JP-A-501213444 (ASAHI CHEMICAL)<br>* Seite 1, linke Spalte, Absatz 1 *<br>* Seite 5,6 *<br>& JP-B-57-10144<br>--- | 1-3 | H02G1/08<br>B29C47/10 |
| Y,D | EP-A-0221481 (WAVIN)<br>* Spalte 7, Zeilen 44 - 45; Ansprüche 1-10; Figuren 1-4 * | 1 | |
| A | --- | 2-8 | |
| Y | DE-A-2738764 (GUTEHOFFNUNGSHÜTTE)<br>* Seite 6, Zeilen 1 - 7 *<br>* Seite 6, Zeilen 30 - 32 *<br>* Seite 7, Zeilen 1 - 8 *<br>* Seite 8, Zeilen 6 - 27 *<br>--- | 1 | |
| A | US-A-4299256 (D.V. BACEHOWSKI ET AL.)<br>* Spalte 3, Zeile 25 - Spalte 4, Zeile 19; Ansprüche 1-3; Figur 1 *<br>--- | 1, 3 | |
| A | PATENT ABSTRACTS OF JAPAN<br>vol. 10, no. 55 (M-458)(2112) 5 März 1986,<br>& JP-A-60 203419 (SHOWA DENKO) 15 Oktober 1985,<br>* das ganze Dokument *<br>--- | 1, 3 | RECHERCHIERTE SACHGEBIETE (Int. Cl.5)<br><br>H02G<br>G02B<br>B29C |
| A | US-A-4609181 (W.C. FISCHER)<br>* Anspruch 1 *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 12 DECEMBER 1989 | LOMMEL A. |